# FASCICULE DE BREVET EUROPEEN

(11) **EP 3 480 458 B1**
(45) Date de publication et mention de la délivrance du brevet: **22.04.2020**
(21) Numéro de dépôt: 18203507.1
(22) Date de dépôt: 30.10.2018
(51) Int. Cl.: F04B 1/047, F04B 1/107, F03C 1/047, F16D 55/40, B60T 1/00

(54) **MACHINE HYDRAULIQUE COMPRENANT UN SYSTÈME DE FREINAGE AMÉLIORÉ**
HYDRAULISCHE MASCHINE, DIE EIN VERBESSERTES BREMSSYSTEM UMFASST
HYDRAULIC MACHINE COMPRISING IMPROVED BRAKING SYSTEM

(30) Priorité: 02.11.2017 FR 1760319
(43) Date de publication de la demande: 08.05.2019
(73) Titulaire: Poclain Hydraulics Industrie, 60410 Verberie (FR)
(72) Inventeur: GERLACH, Carsten, 60410 VERBERIE (FR); HINZE, Jens, 60410 VERBERIE (FR); MARKS, Jörg, 60410 VERBERIE (FR)
(74) Mandataire: Cabinet Beau de Loménie

(56) Documents cités:
- EP-A1- 1 154 170
- FR-A1- 2 579 281
- FR-A1- 2 796 886
- FR-A1- 2 958 986

## Description

### DOMAINE DE L'INVENTION

La présente invention concerne le domaine des freins pour machines hydrauliques. Une telle machine hydraulique est par exemple connue du document FR 2 579 281 A1.

### ETAT DE LA TECHNIQUE ANTERIEURE

Les machines hydrauliques nécessitent communément un balayage par de l'huile pour assurer le refroidissement et la lubrification des différents éléments, notamment les éléments de la partie motrice ou de la partie de pompage, et ainsi en assurer le bon fonctionnement. Par balayage, on entend qu'une circulation d'huile est assurée au sein du carter.

Un tel balayage est typiquement réalisé via un circuit hydraulique dédié, ce qui complexifie la structure du système hydraulique.

### PRESENTATION DE L'INVENTION

Le présent exposé concerne une machine hydraulique comprenant :
- un carter monté en rotation relative par rapport à un arbre,
- un bloc cylindres muni d'une pluralité de pistons disposé dans un volume interne du carter,
- des premiers moyens de freinage, solidaires en rotation du carter,
- des deuxièmes moyens de freinage, solidaires en rotation de l'arbre, adaptés pour coopérer avec les premiers moyens de freinage,
- un piston de freinage adapté pour solliciter les premiers moyens de freinage, ledit piston de freinage étant associé à des moyens de rappel tendant à exercer un effort sur le piston de freinage tendant à solliciter les premiers et/ou deuxièmes moyens de freinage de manière à les mettre en contact,
- une chambre de défreinage, adaptée pour être reliée à une source de pression de manière à sélectivement appliquer une pression de défreinage sur le piston de freinage, tendant ainsi à s'opposer à l'effort appliqué par les moyens de rappel sur le piston de freinage, et permettant de séparer les premiers et deuxièmes moyens de freinage,
ledit dispositif de freinage étant caractérisé en ce qu'un canal de balayage est aménagé dans l'arbre de manière à définir un débit de fuite entre la chambre de défreinage et un volume interne du carter de frein.

Selon un exemple, ledit canal de balayage est muni d'une restriction définissant typiquement une pression minimale dans la chambre de défreinage.

Selon un exemple, ledit canal de balayage est muni d'un clapet anti-retour.

Optionnellement, les moyens de rappel sont alors configurés de manière à ce qu'au-delà d'une première valeur seuil de pression au sein de la chambre de défreinage, les premiers moyens de freinage et les deuxièmes moyens de freinage soient désengagés, et ledit clapet anti-retour présente un tarage à une valeur de tarage strictement supérieure à ladite première valeur seuil de pression.

Selon un exemple, ladite machine est une machine hydraulique à pistons radiaux, comprenant un bloc cylindres muni d'une pluralité de pistons disposés radialement autour d'un axe de rotation et disposés en regard d'une came multilobes.

Selon un exemple, ledit système comprend en outre un orifice d'admission débouchant dans la chambre de défreinage, l'orifice d'admission étant destiné à être relié à une source de pression.

Selon un exemple, l'arbre est formé en deux parties, respectivement une partie proximale et une partie distale, et dans lequel le canal de balayage débouche dans une chambre de balayage aménagée entre la partie proximale et la partie distale de l'arbre.

En variante, le canal de balayage débouche radialement dans une chambre formée entre un distributeur de la machine hydraulique et l'arbre.

Selon un exemple, le canal de balayage débouche dans la chambre de défreinage à une extrémité de l'arbre.

En variante, le canal de balayage débouche radialement dans la chambre de défreinage, dans une cavité de balayage formée à une extrémité des premiers et deuxièmes moyens de freinage selon une direction axiale de l'arbre.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un système comprenant un dispositif de freinage selon un aspect de l'invention, associé à une machine hydraulique ;
- la figure 2 est un schéma hydraulique équivalent au système représenté sur la figure 1,
- la figure 3 est une variante du système représenté sur la figure 1,
- la figure 4 est un schéma hydraulique équivalent au système représenté sur la figure 3.

Sur l'ensemble des figures, les éléments en commun sont repérés par des références numériques identiques.

### DESCRIPTION DETAILLEE D'EXEMPLES DE REALISATION

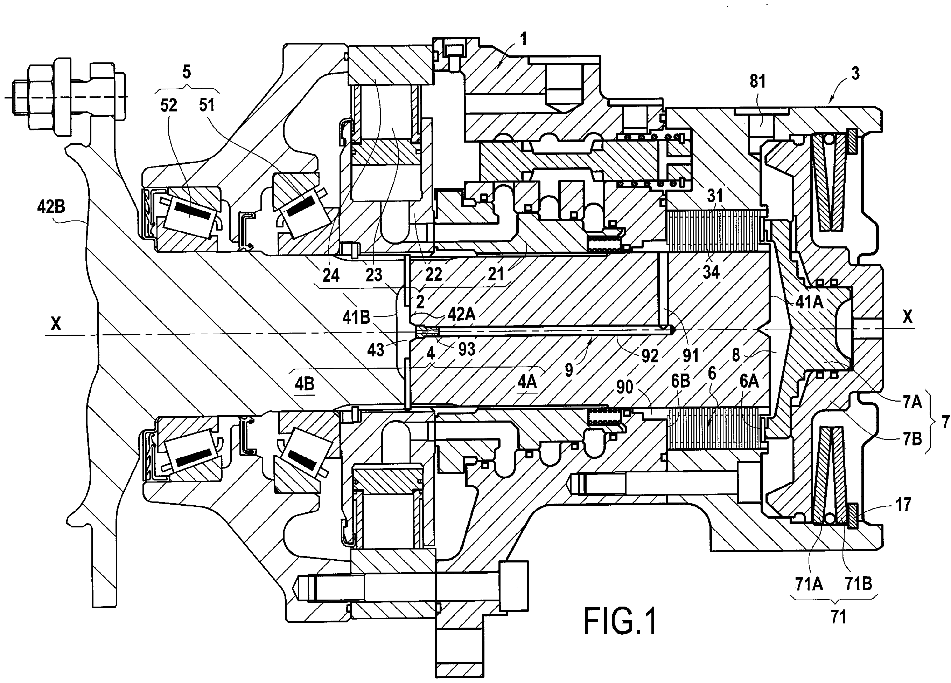

La figure 1 représente une vue schématique en coupe d'un ensemble selon un aspect de l'invention.

On représente sur cette figure un ensemble comprenant un carter 1 dans lequel sont disposés une machine hydraulique 2 et un système de freinage 3.

Un arbre 4 est engagé dans le carter 1, et est relié au carter via un palier 5 comprenant deux éléments de roulement. Cet arbre 4 définit un axe de rotation s'étendant selon une direction longitudinale X-X. L'arbre 4 est ici réalisé en deux parties ; une partie proximale 4A et une partie distale 4B, la partie proximale étant ici définie arbitrairement comme celle la plus proche du système de freinage 3. Pour chaque partie 4A et 4B de l'arbre, on définit une extrémité proximale 41A et 41B respectivement, et une extrémité distale 42A et 42B respectivement, l'extrémité proximale de chaque partie étant la plus proche du système de freinage 3.

Le carter 1 tel que représenté comprend un premier volume interne dans lequel est logée la machine hydraulique 2.

Cette machine hydraulique 2 est ici une machine hydraulique à pistons radiaux, comprenant un distributeur 21, un bloc cylindres 22 dans lequel sont disposés des pistons 23 disposés en regard d'une came multilobes 24. Cette came multilobes 24 est ici formée par une portion du carter 1. Le bloc cylindres 22 est monté fixe par rapport à l'arbre 4, de sorte que ces deux éléments 22 et 4 soient liés en rotation, par exemple au moyens de cannelures. Le distributeur 21 est positionné dans le prolongement de l'extrémité proximale 41B de la partie distale 4B de l'arbre 4.

Dans le mode de réalisation représentée, la machine hydraulique est à arbre tournant et came fixe. En variante, la machine peut être à came tournante et arbre fixe.

La structure d'une telle machine hydraulique est bien connue, et ne sera pas décrite plus en détail par la suite.

A titre de variante, la machine hydraulique peut être à pistons axiaux.

Le palier 5 comprend deux éléments de roulement 51 et 52, ici deux roulements à rouleaux coniques espacés l'un par rapport à l'autre selon la direction longitudinale de l'arbre 4. L'élément de roulement 51 est ainsi qualifié d'élément de roulement proximal 51, tandis que l'élément de roulement 52 est qualifié d'élément de roulement distal 52. L'espacement entre les éléments de roulement 51 et 52 définit un second volume interne du carter 1.

Le système de freinage 3 comprend une pluralité de disques de freinage 31 solidaires du carter 1, et une pluralité de disques de freinage 34 solidaires de l'arbre 4, notamment par des cannelures ou rainures. Ces disques de freinage 31 et 34 forment ainsi une pile de disques de freinage.

Le système de freinage 3 comprend également une commande de freinage 7, configurée de manière à sélectivement appliquer un effort de compression sur les disques de freinage 31 et 34 afin de piloter un verrouillage du mouvement de rotation relatif de l'arbre 4 par rapport au carter 1. Les disques de freinage 31 et 34 sont logés dans une cavité de freinage formée entre l'arbre 4 (ici la partie proximale 4A de l'arbre 4) et le carter 1, la cavité de freinage présentant ainsi par exemple une forme généralement de tube autour de l'arbre 4.

La commande de freinage 7 telle que représentée est un piston mobile en translation selon la direction longitudinale X-X et adapté pour exercer un effort de compression sur la pile de disques de freinage. Les disques de freinage 31 et 34 entrainent alors un verrouillage du mouvement de rotation relatif de l'arbre 4 par rapport au carter 1 du fait des forces de frottement entre les disques de freinage 31 et 34.

Le piston 7 est couplé à un moyen de rappel 71 tendant à appliquer le piston 7 contre la pile de disques de freinage et tendant donc à appliquer un effort de freinage. Dans l'exemple représenté, le piston 7 est formé de deux pièces 7A et 7B, la pièce 7B assurant l'étanchéité du système de freinage 3 tandis que la pièce 7A vient au contact des disques de freinage afin d'appliquer un effort de compression sur la pile de disques de freinage. La pièce 7B du piston 7 vient ainsi au contact des disques de freinage au niveau d'une extrémité proximale 6A de la cavité de freinage 6 Une telle structure en deux pièces est notamment avantageuse pour la fabrication du piston 7, mais on comprend bien que le piston 7 peut également être réalisé en une seule pièce, ou présenter toute structure permettant de réaliser les fonctions décrites. Le moyen de rappel 71 est ici formé de deux rondelles 71A et 71B montées successivement entre une butée 17 du carter et la pièce 7A du piston 7. On comprend que la structure du moyen de rappel 71 est adaptée en fonction de la géométrie du système et de la nature des rondelles choisies ; le mode de réalisation représenté comprenant deux rondelles est donc uniquement illustratif et pas limitatif, et le moyen de rappel 71 peut également être formé par exemple par une unique rondelle Belleville, un ressort ou tout autre moyen adapté.

Le système de freinage 3 comprend également une chambre de défreinage 8 présentant un orifice d'alimentation 81 typiquement relié à une source d'alimentation en pression (non représentée sur la figure 1), par exemple une pompe de gavage comme on le verra par la suite.

Une montée en pression au sein de la chambre de défreinage 8 exerce un effort de défreinage sur le piston 7 antagoniste à l'effort exercé par le moyen de rappel 71. Ainsi, l'application d'une pression au sein de la chambre de défreinage 8 permet de désengager les disques de freinage 31 et 34 et ainsi permettre la rotation de l'arbre 4 par rapport au carter 1 (ou inversement).

Le système tel que présenté applique donc par défaut un effort de freinage ; l'application d'une pression au sein de la chambre de défreinage 8 est requise afin de permettre la mise en rotation relative de l'arbre 4 et du carter 1.

On comprend donc qu'en fonctionnement, une pression est maintenue au sein de la chambre de défreinage 8 afin de permettre la rotation relative de l'arbre 4 et du carter 1.

Le système proposé vise à exploiter cette alimentation en pression permanente lors du fonctionnement afin de réaliser un balayage en huile à l'intérieur du premier volume interne du carter 1 dans lequel est disposée la machine hydraulique 2.

Ainsi, dans le système proposé, un canal de balayage 9 est aménagé dans l'arbre 4 afin de relier la chambre de défreinage 8 au premier volume interne du carter 1 dans lequel est disposée la machine hydraulique 2.

Dans le mode de réalisation représenté sur la figure 1, le canal de balayage 9 s'étend ici depuis une cavité de balayage 90 formée dans le prolongement d'une extrémité distale 6B de la cavité de freinage 6 comprenant l'empilement de disques de frein 31 et 34, et est ainsi disposée de l'autre côté de la cavité de freinage 6 par rapport au piston 7. Dans l'exemple représenté, la cavité de balayage 90 est formée entre l'arbre 4 (ici la partie proximale 4A de l'arbre 4) et une portion du carter 1 entourant le distributeur 21. Cette cavité de balayage 90 débouche dans une cavité interne à l'arbre 4, formée à la liaison entre les deux parties 4A et 4B de l'arbre 4. Cette cavité interne 43 est reliée au premier volume interne du carter 1 via des perçages ou cannelures typiquement aménagés dans l'extrémité distale 42A de la partie proximale 4A de l'arbre 4 et/ou dans l'extrémité proximale 41B de la partie distale 4B de l'arbre 4 et/ou dans un espace entre la partie distale 4B et la partie proximale 4A de l'arbre 4.

Le canal de balayage 9 tel que représenté comprend une portion radiale 91 et une portion axiale 92, s'étendant respectivement radialement et axialement par rapport à l'axe de rotation X-X. On comprend bien qu'une telle structure n'est pas limitative, dès lors que le canal de balayage 9 permet de relier la chambre de défreinage 8 au premier volume interne du carter 1 dans lequel est disposée la machine hydraulique 2.

Le canal de balayage 9 permet ainsi de réaliser un écoulement d'huile depuis la chambre de défreinage vers le premier volume interne du carter 1 dans lequel est disposée la machine hydraulique 2. Ainsi, en fonctionnement, un débit d'huile est assuré dans le premier volume interne du carter 1 pour permettre de réaliser un balayage d'huile, et ainsi assurer la lubrification et le refroidissement des éléments tournant de la machine hydraulique 2. Un orifice de sortie est typiquement aménagé dans le carter 1 afin d'assurer un renouvellement de l'huile.

Le canal de balayage 9 est typiquement muni d'une restriction 93, ici représentée comme positionnée au niveau de l'extrémité de la portion axiale 92 du canal de balayage 9 débouchant dans la cavité interne 43 de l'arbre 4. Cette restriction 93 réalise une fonction de perte de charge, et impose donc une pression dans la chambre de défreinage 8 selon le débit circulant dans le canal de balayage 9. La restriction 93 est optionnellement calibrée de manière à permettre l'établissement d'une pression minimale dans la chambre de défreinage pour réaliser le défreinage. La restriction 93 est typiquement formée par un composant rapporté dans le canal de balayage 9, ou de manière alternative est formée par au moins un passage de section calibrée du canal de balayage 9.

L'orifice d'alimentation 81 est alors relié à une source de pression délivrant un débit nécessaire permettant ainsi la mise en pression de la chambre de défreinage 8.

Le système proposé permet ainsi d'exploiter l'huile utilisée pour piloter le système de freinage 3 afin de réaliser un balayage en huile de la machine hydraulique 2 associée, et permet donc de s'affranchir d'un circuit hydraulique dédié, notamment d'un orifice d'admission dédié.

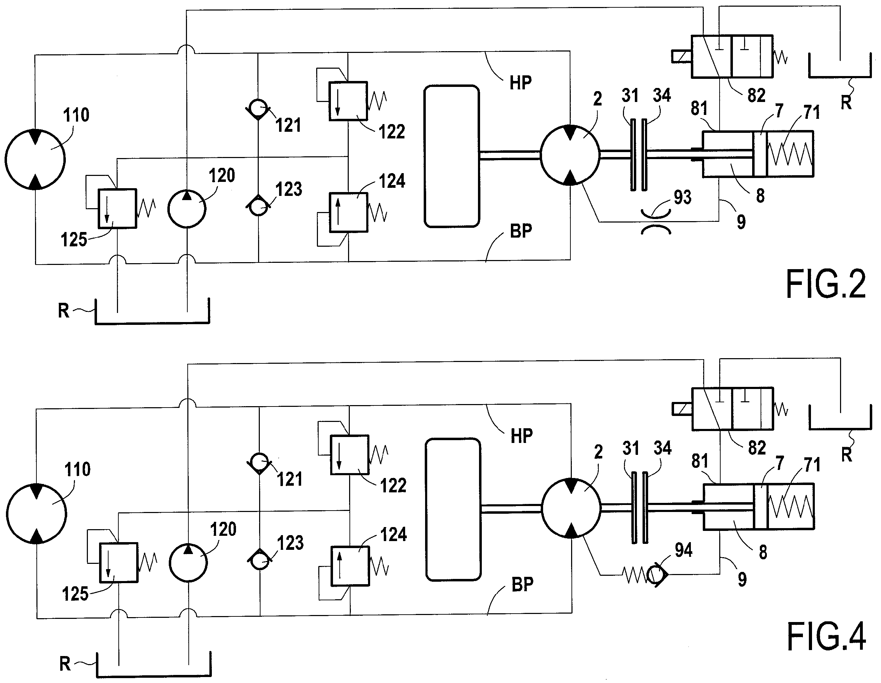

La figure 2 est un schéma hydraulique illustrant le principe de fonctionnement du système représenté sur la figure 1 dans le cas de l'application pour un moteur hydraulique entrainant une roue en rotation.

On représente sur cette figure un moteur hydraulique 2 entrainant une roue, le moteur hydraulique 2 correspondant à la machine hydraulique 2 décrite précédemment, ici associé à une pompe hydraulique 110. La pompe hydraulique 110 et le moteur hydraulique 2 forment un circuit hydraulique présentant une ligne haute pression HP et une ligne basse pression BP, reliées respectivement au refoulement et à l'admission de la pompe hydraulique 110. Le circuit hydraulique tel que représenté comprend également un circuit de gavage, comprenant une pompe de gavage 120 reliée à la ligne haute pression HP via un clapet anti retour 121 et un limiteur de pression 122, et à la ligne basse pression BP via un clapet anti retour 123 et un limiteur de pression 124. Le circuit de gavage est également relié à un réservoir à pression ambiante R via un limiteur de pression 125 permettant d'éviter une surpression au sein du circuit de gavage. Les lignes HP et BP sont typiquement les lignes haute pression et basse pression en fonctionnement en marche avant alors que la roue étant motrice. Cependant, lors d'un fonctionnement en marche arrière ou lorsque la roue est en retenue (en descente), les pressions dans ces deux lignes peuvent s'inverser.

On représente également sur cette figure le système de freinage, comprenant les disques de frein 31 et 34 ici représentés schématiquement. La chambre de défreinage 8 et le piston 7 sont schématisés par un vérin muni d'un ressort de poussée schématisant l'effet du moyen de rappel 71. L'orifice d'alimentation 81 de la chambre de défreinage 8 est ici relié à la pompe de gavage 120 via une vanne 3 voies 2 positions 82, permettant de relier la chambre de défreinage 8 sélectivement à la pompe de gavage 120 ou au réservoir à pression ambiante R.

Le pilotage de la vanne 82 permet ainsi de commander une montée en pression au sein de la chambre de défreinage 8, ou au contraire une purge de cette chambre de défreinage 8 dans le réservoir R.

Le canal de balayage 9 est également représenté schématiquement, muni de la restriction 93.

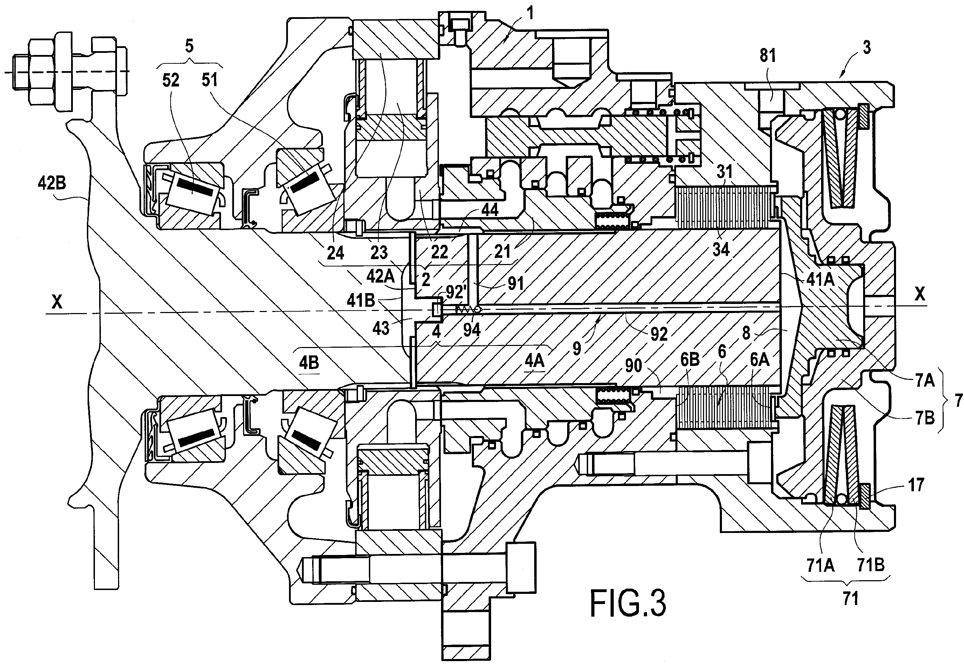

Le canal de balayage 9 peut également être muni d'un clapet anti retour, permettant de s'assurer que la circulation de fluide se fait uniquement dans le sens de la chambre de défreinage 8 vers le premier volume interne du carter 1, tel que représenté sur les figures 3 et 4.

La figure 3 représente une variante du mode de réalisation représenté sur la figure 1.

Ce mode de réalisation représenté sur la figure 3, est similaire à celui déjà décrit en référence à la figure 1. La structure du canal de balayage 9 est toutefois distincte. Dans ce mode de réalisation, le canal de balayage 9 comprend une portion axiale 92 s'étendant au centre de la partie proximale 4A de l'arbre 4 depuis la chambre de défreinage 8, et une portion radiale 91 reliant la portion axiale 92 à un alésage formé dans le distributeur 21, formant ainsi une chambre 44 entre le distributeur 21 et l'arbre 4, et débouchant dans le volume interne du carter 1 comprenant le bloc cylindres 22. La portion axiale 92 est borgne, en étant bouchée du côté opposé à la chambre de défreinage 8. Il peut, comme en l'espèce, s'agir d'un perçage traversant, dont une extrémité est ouverte dans la chambre de défreinage 8 et dont l'extrémité opposée est bouchée par un bouchon 92'. La liaison entre la portion axiale 92 et la portion radiale 91 est ici obturée par un clapet anti retour taré 94, configuré de manière à ne permettre un passage depuis la chambre de défreinage 8 vers le premier volume interne du carter 1 que lorsque la pression au sein de la chambre de défreinage 8 dépasse une valeur seuil de pression. On comprend qu'un clapet anti retour taré peut également être associé à la structure de canal de balayage 9 tel que décrit en référence à la figure 1, et inversement qu'une restriction peut être disposée dans le canal de balayage 9 tel que représenté sur la figure 3.

La figure 4 représente le schéma hydraulique équivalent au mode de réalisation représenté sur la figure 3. Cette figure est donc similaire à la figure 2, dans laquelle la restriction 93 disposée dans le canal de balayage 9 est remplacée par un clapet anti retour taré 94.

En fonctionnement, on réalise une montée en pression au sein de la chambre de défreinage 8 afin de désengager les disques de freinage 31 et 34 comme déjà décrit précédemment. Toutefois, à la différence du mode de réalisation représenté sur les figures 1 et 2, le débit de fuite depuis la chambre de défreinage 8 vers le premier volume interne du carter 1 ne s'établit qu'une fois que la pression au sein de la chambre de défreinage 8 a atteint une valeur seuil de tarage, correspondant à la valeur de pression à partir de laquelle le clapet anti retour taré 94 passe d'une position fermée à une position ouverte.

Cette valeur seuil de tarage est avantageusement strictement supérieure à une première valeur seuil de pression, correspondant à la valeur de pression au sein de la chambre de défreinage 8 à partir de laquelle les disques de freinage 31 et 34 sont désengagés.

Ainsi, on assure le désengagement des disques de freinage 31 et 34 et on autorise donc la rotation de l'arbre 4 par rapport au carter 1 préalablement à l'établissement du débit de fuite depuis la chambre de défreinage 8 vers le premier volume interne du carter 1.

Un tel mode de réalisation est avantageux en ce qu'il permet de réaliser un défreinage manuel, par exemple pour remorquer ou déplacer un appareil ou engin défaillant muni d'un tel système. En effet, dans le cas d'un défreinage manuel, on comprend que la montée en pression au sein de la chambre de défreinage 8 est réalisée de manière plus progressive que dans le cas où une pompe hydraulique réalise cette montée en pression. Il est donc intéressant d'assurer dans un premier temps le désengagement des disques de freinage 31 et 34 puis uniquement dans un second temps, une fois la valeur seuil de tarage atteinte, un débit d'huile depuis la chambre de défreinage 8 vers le premier volume interne du carter 1. On comprend par ailleurs que l'utilisation d'un clapet anti retour taré permet de maintenir le défreinage sans nécessiter l'application constante d'une pression par une source de pression, ce qui est particulièrement avantageux dans le cas d'un défreinage manuel et évite ainsi à un utilisateur de devoir constamment appliquer une pression pour maintenir le défreinage, par exemple dans le cas de l'utilisation d'une pompe à main en l'absence d'un clapet anti retour taré à une valeur supérieure à la pression de défreinage.

Par ailleurs, un tel mode de fonctionnement permet d'éviter un engagement accidentel des disques de freinage 31 et 34 en cas de défaillance de la source de pression alimentant la chambre de défreinage 8 une fois la pression de défreinage établie au sein de cette dernière.

En considérant les modes de réalisation décrits précédemment, on comprend donc que le présent exposé propose de munir le canal de balayage 9 reliant la chambre de défreinage 8 au premier volume interne du carter 1 d'un élément permettant de contrôler et/ou limiter le débit passant de la chambre de défreinage 8 au premier volume interne du carter 1, en particulier en générant une perte de charge suffisante au sein du canal de balayage 9. On comprend par ailleurs que les structures internes du canal de balayage 9 telles que présentées ne sont pas limitatives, et que toute structure permettant de relier la chambre de défreinage 8 au premier volume interne du carter 1 comprenant le bloc cylindres 22 peut être employé, le canal de balayage étant alors muni d'un élément permettant de contrôler et/ou limiter le débit passant de la chambre de défreinage 8 au premier volume interne du carter 1 tel qu'une restriction ou un clapet anti retour taré.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Machine hydraulique comprenant :
- un carter (1) monté en rotation relative par rapport à un arbre (4),
- un bloc cylindres (22) muni d'une pluralité de pistons (23) disposé dans un volume interne du carter (1)
- des premiers moyens de freinage (31), solidaires en rotation du carter (1),
- des deuxièmes moyens de freinage (34), solidaires en rotation de l'arbre (4), adaptés pour coopérer avec les premiers moyens de freinage (31),
- un piston de freinage (7) adapté pour solliciter les premiers moyens de freinage (31) ou seconds moyens de freinage (34), ledit piston de freinage (7) étant associé à des moyens de rappel (71) tendant à exercer un effort sur le piston de freinage (7) tendant à solliciter les premiers et/ou deuxièmes moyens de freinage (31, 34) de manière à les mettre en contact,
- une chambre de défreinage (8), adaptée pour être reliée à une source de pression de manière à sélectivement appliquer une pression de défreinage sur le piston de freinage (7), tendant ainsi à s'opposer à l'effort appliqué par les moyens de rappel (71) sur le piston de freinage (7), et permettant de séparer les premiers et deuxièmes moyens de freinage (31, 34),
ledit dispositif de freinage étant **caractérisé en ce qu'**un canal de balayage (9) est aménagé dans l'arbre (4) de manière à définir un débit de fuite entre la chambre de défreinage (8) et un volume interne du carter (1) comprenant le bloc cylindres (22).

2. Machine hydraulique selon la revendication 1, dans lequel ledit canal de balayage (9) est muni d'une restriction (93)

3. Machine hydraulique selon l'une des revendications 1 ou 2, dans lequel ledit canal de balayage (9) est muni d'un clapet anti-retour (94).

4. Machine hydraulique selon la revendication 3, dans lequel les moyens de rappel (71) sont configurés de manière à ce qu'au-delà d'une première valeur seuil de pression au sein de la chambre de défreinage (8), les premiers moyens de freinage (31) et deuxièmes moyens de freinage (34) soient désengagés, et dans lequel ledit clapet anti-retour (94) présente un tarage à une valeur de tarage strictement supérieure à ladite première valeur seuil de pression.

5. Machine hydraulique selon la revendication 1, dans laquelle le bloc cylindres (22) comprend une pluralité de pistons (23) disposés radialement autour d'un axe de rotation et disposés en regard d'une came multilobes (24).

6. Machine hydraulique selon l'une des revendications 1 à 5, comprenant en outre un orifice d'admission (81) débouchant dans la chambre de défreinage (8), l'orifice d'admission (81) étant destiné à être relié à une source de pression (120).

7. Machine hydraulique selon l'une des revendications 1 à 6, dans laquelle l'arbre (4) est formé en deux parties, respectivement une partie proximale (4A) et une partie distale (4B), et dans lequel le canal de balayage (9) débouche dans une chambre de balayage aménagée entre la partie proximale (4A) et la partie distale (4B) de l'arbre (4).

8. Machine hydraulique selon l'une des revendications 1 à 6 dans lequel le canal de balayage (9) débouche radialement dans une chambre (44) formée entre un distributeur (21) de la machine hydraulique et l'arbre (4).

9. Machine hydraulique selon l'une des revendications 1 à 8, dans laquelle le canal de balayage (9) débouche dans la chambre de défreinage (8) à une extrémité (41A) de l'arbre (4).

10. Machine hydraulique selon l'une des revendications 1 à 8, dans laquelle le canal de balayage (9) débouche radialement dans la chambre de défreinage (8), dans une cavité de balayage (90) formée à une extrémité des premiers et deuxièmes moyens de freinage (31, 34) selon une direction axiale de l'arbre (4).

## Patentansprüche

1. Hydraulische Maschine, umfassend:
- ein Gehäuse (1), das in Relation zu einer Welle (4) drehbar montiert ist,
- einen Zylinderblock (22), der mit mehreren Kolben (23) versehen ist und in einem inneren Volumen des Gehäuses (1) angeordnet ist,
- erste Bremsmittel (31), die drehfest mit dem Gehäuse (1) verbunden sind,
- zweite Bremsmittel (34), die drehfest mit der Welle (4) verbunden und dazu geeignet sind, mit den ersten Bremsmitteln (31) zusammenzuwirken,
- einen Bremskolben (7), der dazu geeignet ist, die ersten Bremsmittel (31) oder die zweiten Bremsmittel (34) vorzuspannen, wobei der Bremskolben (7) Rückholmitteln (71) zugeordnet ist, die dazu neigen, eine Kraft auf den Bremskolben (7) auszuüben, die dazu neigt, die ersten und/oder zweiten Bremsmittel (31, 34) auf eine Weise vorzuspannen, die diese in Kontakt bringt,
- eine Bremslösekammer (8), die dazu geeignet ist, mit einer Druckquelle auf eine Weise verbunden zu werden, um selektiv einen Bremslösedruck auf den Bremskolben (7) auszuüben, der so dazu neigt, der durch die Rückholmittel (71) auf den Bremskolben (7) ausgeübten Kraft entgegenzuwirken, und erlaubt, die ersten und zweiten Bremsmittel (31, 34) zu trennen,
wobei die Bremsvorrichtung **dadurch gekennzeichnet ist, dass** ein Spülkanal (9) auf eine Weise in die Welle (4) eingearbeitet ist, um eine Leckrate zwischen der Bremslösekammer (8) und einem inneren Volumen des Gehäuses (1), das den Zylinderblock (22) umfasst, zu definieren.

2. Hydraulische Maschine nach Anspruch 1, wobei der Spülkanal (9) mit einer Verengung (93) versehen ist.

3. Hydraulische Maschine nach einem der Ansprüche 1 oder 2, wobei der Spülkanal (9) mit einer Rückschlagklappe (94) versehen ist.

4. Hydraulische Maschine nach Anspruch 3, wobei die Rückholmittel (71) auf eine Weise ausgestaltet sind, dass über einem ersten Schwellenwert des Drucks innerhalb der Bremslösekammer (8) die ersten Bremsmittel (31) und die zweiten Bremsmittel (34) außer Eingriff gebracht werden, und wobei die Rückschlagklappe (94) eine Einstellung auf einen Einstellwert aufweist, der strikt höher ist als der erste Schwellenwert des Drucks.

5. Hydraulische Maschine nach Anspruch 1, wobei der Zylinderblock (22) mehrere Kolben (23) umfasst, die radial um eine Drehachse angeordnet sind und einem Nocken (24) mit mehreren Fortsätzen zugewandt angeordnet sind.

6. Hydraulische Maschine nach einem der Ansprüche 1 bis 5, die ferner eine Einlassöffnung (81) umfasst, die in die Bremslösekammer (8) mündet, wobei die Einlassöffnung (81) dazu bestimmt ist, mit einer Druckquelle (120) verbunden zu werden.

7. Hydraulische Maschine nach einem der Ansprüche 1 bis 6, wobei die Welle (4) aus zwei Teilen gebildet ist, einem proximalen Teil (4A) bzw. einem distalen Teil (4B), und wobei der Spülkanal (9) in eine Spülkammer mündet, die zwischen dem proximalen Teil (4A) und dem distalen Teil (4B) der Welle (4) vorgesehen ist.

8. Hydraulische Maschine nach einem der Ansprüche 1 bis 6, wobei der Spülkanal (9) radial in eine Kammer (44) mündet, die zwischen einem Verteiler (21) der hydraulischen Maschine und der Welle (4) gebildet ist.

9. Hydraulische Maschine nach einem der Ansprüche 1 bis 8, wobei der Spülkanal (9) in die Bremslösekammer (8) an einem Ende (41A) der Welle (4) mündet.

10. Hydraulische Maschine nach einem der Ansprüche 1 bis 8, wobei der Spülkanal (9) radial in die Bremslösekammer (8) mündet, in einem Spülhohlraum (90), der an einem Ende der ersten und zweiten Bremsmittel (31, 34) gemäß einer axialen Richtung der Welle (4) gebildet ist.

## Claims

1. A hydraulic machine comprising:
- a casing (1) rotatably mounted relative to a shaft (4) ;
- a cylinder block (22) provided with a plurality of pistons (23) arranged in an internal volume of the casing (1);
- first brake means (31) constrained to rotate with the casing (1);
- second brake means (34) constrained to rotate with the shaft (4), and adapted to co-operate with the first brake means (31);
- a braking piston (7) adapted to act on the first brake means (31) or the second brake means (34), said braking piston (7) being associated with return means (71) tending to exert a force on the braking piston (7) tending to act on the first and/or second brake means (31, 34) so as to put them into contact; and
- a brake-release chamber (8) adapted to be connected to a pressure force so as to apply a brake-release pressure selectively to the braking piston (7), thereby tending to oppose the force applied by the return means (71) on the braking piston (7), so as to enable the first and second brake means (31, 34) to be separated;
said braking device being **characterized in that** a sweeping channel (9) is arranged in the shaft (4) so as to define a leakage flow between the brake-release chamber (8) and an internal volume of the casing (1) containing the cylinder block (22).

2. A hydraulic machine according to claim 1, wherein the sweeping channel (9) is provided with a constriction (93) .

3. A hydraulic machine according to claim 1 or claim 2, wherein the sweeping channel (9) is provided with a check valve (94).

4. A hydraulic machine according to claim 3, wherein the return means (71) are configured so that above a pressure within the brake-release chamber (8) that is above a first pressure threshold value, the first brake means (31) and the second brake means (34) are disengaged, and wherein said check valve (94) is rated to a rating value that is strictly greater than said first pressure threshold value.

5. A hydraulic machine according to claim 1, wherein the cylinder block (22) comprises a plurality of pistons (23) arranged radially around an axis of rotation and arranged facing a multi-lobe cam (24).

6. A hydraulic machine according to any one of claims 1 to 5, further comprising an admission orifice (81) leading into the brake-release chamber (8), the admission orifice (81) being for connection to a pressure source (120) .

7. A hydraulic machine according to any one of claims 1 to 6, wherein the shaft (4) is made up of two portions, respectively a proximal portion (4A) and a distal portion (4B), and wherein the sweeping channel (9) leads into a sweeping chamber arranged between the proximal portion (4A) and the distal portion (4B) of the shaft (4).

8. A hydraulic machine according to any one of claims 1 to 6, wherein the sweeping channel (9) leads radially into a chamber (44) formed between a distributor valve (21) of the hydraulic machine and the shaft (4).

9. A hydraulic machine according to any one of claims 1 to 8, wherein the sweeping channel (9) opens into the brake-release chamber (8) at one end (41A) of the shaft (4) .

10. A hydraulic machine according to any one of claims 1 to 8, wherein the sweeping channel (9) opens out radially into the brake-release chamber (8) in a sweeping cavity (90) formed at one end of the first and second brake means (31, 34) in an axial direction of the shaft (4).
